# EUROPÄISCHE PATENTANMELDUNG

(11) **EP 1 410 734 A1**
(43) Veröffentlichungstag der Anmeldung: **21.04.2004**
(21) Anmeldenummer: 02022851.6
(22) Anmeldetag: 14.10.2002
(51) Int. Cl.: A47B 96/20, B32B 3/18, B32B 21/02

(54) **Platte aus einem Holzwerkstoff in Sandwichkonstruktion**

(71) Anmelder: Sedus Stoll AG, 79761 Waldshut (DE)
(72) Erfinder: Jehle, Herbert, 79793 Wutöschingen (DE)
(74) Vertreter: Pöpper, Evamaria, Dr.

(57) **Zusammenfassung**

Die Erfindung betrifft eine Platte (1) aus einem Holzwerkstoff in einer Sandwichkonstruktion mit einer Vorderseite (2), einer Rückseite (3) und einer im Inneren dazwischen angeordneten Füllschicht (4) sowie seitlichen Begrenzungsflächen (6). Sie ist dadurch gekennzeichnet, dass die Füllschicht (4) aus parallel zueinander angeordneten Streifen (5) einer an sich bekannten Holzweichfaserplatte besteht, wobei die Streifen (5) mit der Vorderseite (2) und der Rückseite (3) der Platte (1) infolge Druckeinwirkung verbunden und die seitlichen Begrenzungsflächen (6) angeleimt sind.

## Beschreibung

### Technisches Gebiet

Die Erfindung bezieht sich auf das Gebiet der Möbel- und Bauindustrie. Sie betrifft eine Platte aus einem Holzwerkstoff in einer Sandwichkonstruktion, welche vorzugsweise als Möbelplatte, z. B. Tischplatte, Dekorplatte, oder als Türblatt eingesetzt werden kann.

### Stand der Technik

Es ist bekannt, Möbel- oder Türplatten aus massivem Holz herzustellen. Nachteilig daran sind einerseits die hohen Herstellungs- und Anschaffungskosten, andererseits das große Gewicht derartiger Platten, die sich zudem noch verziehen können.

Aus diesem Grunde wurde beispielsweise in DE 195 41 040 A1 vorgeschlagen, einen Schreibtisch völlig aus Papier, Pappe oder Karton herzustellen, dessen Tragkonstruktion aus Wabenmaterial besteht. Dieser Schreibtisch ist zwar billig, leicht und voll recyclingfähig, genügt aber hinsichtlich Stabilität nur geringeren Anforderungen im Vergleich zu einem Schreibtisch aus massiven Holz.

Es ist auch bekannt, Wabenkarton als Kernmaterial für Türblätter in Sandwichkonstruktion einzusetzen. Die Vorder- und Rückseiten des Türblattes bestehen meist aus MDF (Medium Density Fiberboard). MDF ist ein Produkt, das aus feinen Holzfasern kombiniert mit synthetischem Harz oder anderen Haftsystemen besteht, welche sich unter Hitze und Druck miteinander verbinden. Es weist hervorragende Eigenschaften auf, wie beispielsweise eine gleichmäßige Dichte und Konsistenz sowie eine feine und defektfreie Oberfläche, was zu einer hohen Festigkeit und sehr guter maschineller Bearbeitbarkeit führt.

Nachteilig an diesen bekannten Tür-Sandwichkonstruktionen mit einem Kernmaterial aus Wabenkarton ist, dass der Wabenkarton an die Vorder- und Rückseiten des Türblattes geklebt werden muss und dadurch relativ lange Trocknungszeiten eingeplant werden müssen. Die Verwendung von Leim ist nicht gerade umweltfreundlich und außerdem kommt nachteilig hinzu, dass eine derartige Konstruktion einen hohlen Klang aufweist, was für Wohn- oder Büromöbel unerwünscht ist.

Bekannt sind Holzweichfaserplatten (Handelsname: GUTEX), die aus Sägewerksnebenprodukten, den sogenannten Hackschnitzeln, hergestellt werden. Die Hackschnitzel werden thermisch-mechanisch zerfasert, mit Wasser vermischt und je nach Anforderung hydrophobiert. Nach Trocknung und Formatierung entsteht so eine Dämmplatte aus Holz, die sich u. a. durch sehr gute Wärme- und Schalldämmung und eine hervorragende Wärmespeicherkapazität auszeichnet. Die Platte ist weiterhin druckbelastbar, recyclingfähig und kompostierbar. Sie wird bisher als Dämmplatte für Wände oder Böden im Haus- und Wohnungsbau eingesetzt.

### Darstellung der Erfindung

Die Erfindung versucht, die genannten Nachteile des bekannten Standes der Technik zu vermeiden. Ihr liegt die Aufgabe zugrunde, eine Platte aus einem Holzwerkstoff in einer Sandwichkonstruktion zu entwickeln, welche vorzugsweise als Möbelplatte, z. B. Tischplatte, Dekorplatte, oder als Türblatt eingesetzt werden kann, und welche sich durch ein geringes Gewicht, Verzugsarmut, gute Umweltverträglichkeit und eine gute Schalldämmung bei vergleichsweise günstigen Herstellungskosten auszeichnet.

Erfindungsgemäß wird dies bei einer Platte gemäß dem Oberbegriff des Patentanspruches 1 dadurch erreicht, dass die Füllschicht aus parallel zueinander angeordneten Streifen einer an sich bekannten Holzweichfaserplatte besteht, wobei die Streifen mit der Vorderseite und der Rückseite der Platte infolge Druckeinwirkung verbunden sind und die seitlichen Begrenzungsflächen angeleimt sind.

Das hat den Vorteil, dass die Platte relativ leicht ist und somit ein Möbelstück, beispielsweise ein Tisch mit einer erfindungsgemäßen Tischplatte relativ einfach und ohne große Kraftanstrengung umgeräumt werden kann. Aufgrund der guten Schalldämmwirkung der Holzweichfaserplattenstreifen wird der hohle Klang vermieden, der bei bekannten Platten mit Wabenkarton als Kernmaterial nachteilig vorhanden ist. Außerdem ist die erfindungsgemäße Platte verzugsarm und umweltverträglich, da sie einerseits aus nachwachsendem Material besteht und anderseits für die Befestigung der Streifen in der Sandwichkonstruktion kein Kleber notwendig ist. Die Platten lassen sich preisgünstig herstellen, denn die Füllung besteht aus handelsüblichen verpressten Holzweichfaserplatten, die aus Sägewerksabfällen hergestellt werden. Lediglich die seitlichen Begrenzungsflächen müssen an die Vorderseite und Rückseite der Platten angeleimt werden.

Es ist zweckmäßig, wenn der Abstand und die Höhe der Streifen der Holzweichfaserplatte in Abhängigkeit von der vorgesehenen mechanischen Belastung der Platte gewählt werden. Dann können die Eigenschaften optimiert werden.

Vorteilhaft ist, wenn für die Vorderseite und Rückseite der erfindungsgemäßen Platte als Material MDF, furnierten Span- oder Sperrholzplatten oder dergleichen verwendet werden.

### Kurze Beschreibung der Zeichnung

In der Zeichnung ist ein Ausführungsbeispiel der Erfindung dargestellt.

Es zeigen:
- Fig.1: eine perspektivische Darstellung der erfindungsgemäßen Platte und
- Fig. 2: eine Explosionsdarstellung dieser aus einem Holzwerkstoff in Sandwichkonstruktion mit Vorderseite, Rückseite, dazwischenliegender Füllung und seitlichen Begrenzungsteilen bestehenden Platte.

Es sind nur die für das Verständnis der Erfindung wesentlichen Elemente gezeigt.

### Wege zur Ausführung der Erfindung

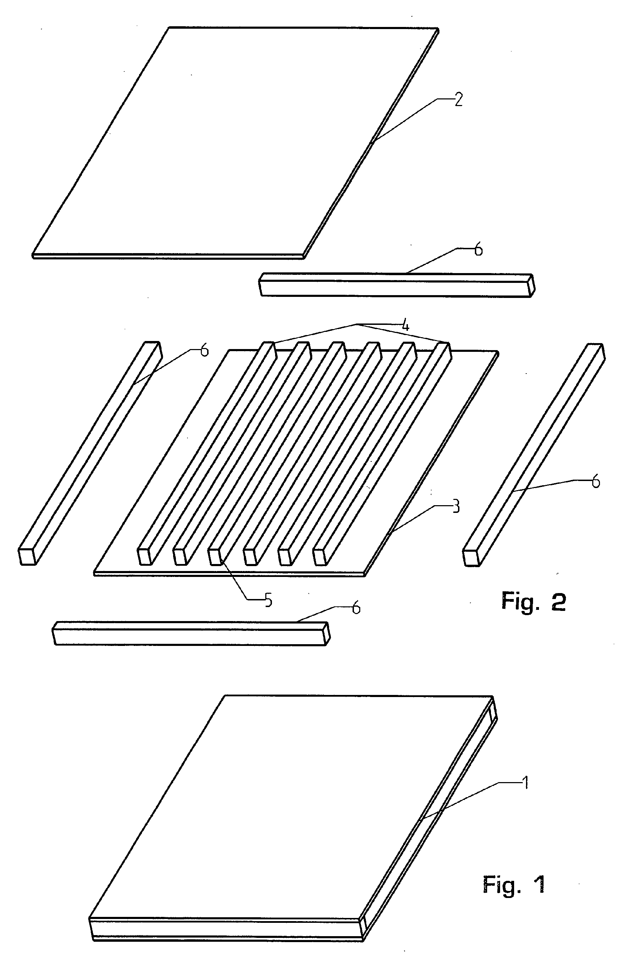

Nachfolgend wird die Erfindung anhand eines Ausführungsbeispieles und der Figuren 1 und 2 näher erläutert.

Fig. 1 zeigt die zusammengebaute fertige Tischplatte, während in Fig. 2 zeigt die Tischplatte in Explosionsdarstellung gezeigt ist.

Die Platte 1 ist in einer Sandwichkonstruktion aufgebaut und besteht aus einer Vorderseite 2, welche die Arbeitsfläche des Tisches ist, aus einer Rückseite 3 und einer dazwischen liegenden Füllschicht 4. Die Füllschicht 4 wird aus Streifen 5 gebildet, die parallel zueinander angeordnet sind und aus handelsüblichem GUTEX-Material bestehen. Wie bereits oben beschrieben, sind GUTEX-Platten Holzweichfaserplatten, die aus Sägewerksnebenprodukten, den sogenannten Hackschnitzeln, hergestellt werden. Die Hackschnitzel werden thermisch-mechanisch zerfasert, mit Wasser vermischt und je nach Anforderung hydrophobiert. Nach Trocknung und Formatierung entsteht so eine Dämmplatte aus Holz, die sich u. a. durch sehr gute Wärme- und Schalldämmung und eine hervorragende Wärmespeicherkapazität auszeichnet. Die Platte ist weiterhin druckbelastbar, recyclingfähig und kompostierbar.

Derartige Holzweichfaserplatten werden nun in Streifen 5 geschnitten, anschließend werden die Streifen 5 parallel zueinander auf die Rückseite 3 der Platte 1 gelegt. Der Abstand und die Höhe der einzelnen Streifen 5 der Holzweichfaserplatte werden in Abhängigkeit von der vorgesehenen mechanischen Belastung der Platte 1 gewählt. Im vorliegenden Ausführungsbeispiel hatten die Streifen 5 eine Höhe von 24 mm und einen Abstand voneinander von 40 mm.

Danach wird die Vorderseite 2 der Platte 1 auf die GUTEX-Streifen 5 gelegt. Um einen guten Verbund der Streifen 5 mit der Vorderseite 2 und der Rückseite 3 der Tischplatte zu erzielen, werden diese drei Bestandteile der Sandwichkonstruktion unter Druck aufeinandergepresst. Abschließend werden die seitlichen Begrenzungsflächen 6, die aus MDF, furnierten Span- oder Sperrholzplatten oder dergleichen bestehen, angeleimt.

Die Vorderseite 2 und die Rückseite 3 sind vorzugsweise MDF-Faserplatten, können aber auch aus anderen Holzwerkstoffen, beispielsweise furnierten Spanplatten bestehen. Die Höhe der verwendeten Faserplatten betrug im vorliegenden Ausführungsbeispiel jeweils 3 mm.

Die erfindungsgemäße Tischplatte zeichnet sich durch ein geringes Gewicht aus, ist dadurch leicht zu transportieren und kann ohne große Kraftanstrengung umgeräumt werden, Auf Grund der guten Schalldämmwirkung der Holzweichfaserplattenstreifen wird vorteilhaft ein hohler Klang vermieden. Außerdem ist die erfindungsgemäße Platte verzugsarm und umweltverträglich, da sie einerseits aus nachwachsendem Material besteht und anderseits für die Befestigung der Streifen in der Sandwichkonstruktion kein Kleber notwendig ist. Die Platten lassen sich preisgünstig herstellen, denn die Füllung besteht aus handelsüblichen verpressten Holzweichfaserplatten, die aus Sägewerksabfällen hergestellt werden. Lediglich die seitlichen Begrenzungsflächen müssen an die Vorderseite und Rückseite der Platten angeleimt werden.

Selbstverständlich ist die Erfindung nicht auf das beschriebene Ausführungsbeispiel beschränkt.

### Bezugszeichenliste

- 1: Platte
- 2: Vorderseite der Platte
- 3: Rückseite der Platte
- 4: Füllschicht
- 5: Streifen der Füllschicht
- 6: Seitliche Begrenzungsflächen

## Patentansprüche

1. Platte (1) aus einem Holzwerkstoff in einer Sandwichkonstruktion mit einer Vorderseite (2), einer Rückseite (3) und einer im Inneren dazwischen angeordneten Füllschicht (4) sowie seitlichen Begrenzungsflächen (6), **dadurch gekennzeichnet, dass** die Füllschicht (4) aus parallel zueinander angeordneten Streifen (5) einer an sich bekannten Holzweichfaserplatte besteht, wobei die Streifen (5) mit der Vorderseite (2) und der Rückseite (3) der Platte (1) infolge Druckeinwirkung verbunden und die seitlichen Begrenzungsflächen (6) angeleimt sind.

2. Platte nach Anspruch 1, **dadurch gekennzeichnet, dass** der Abstand und die Höhe der Streifen (5) der Holzweichfaserplatte in Abhängigkeit von der vorgesehenen mechanischen Belastung der Platte (1) gewählt werden.

3. Platte nach Anspruch 1, **dadurch gekennzeichnet, dass** die Vorderseite (2) und die Rückseite (3) der Platte (1) aus MDF bestehen.

4. Platte nach Anspruch 1, **dadurch gekennzeichnet, dass** die Vorderseite (2) und die Rückseite (3) der Platte (1) aus einer furnierten Span- oder Sperrholzplatte bestehen.

5. Platte nach Anspruch 1, **dadurch gekennzeichnet, dass** die seitlichen Begrenzungsflächen (6) aus MDF, furnierten Span- oder Sperrholzplatten oder dergleichen bestehen.
